# EUROPÄISCHE PATENTSCHRIFT

(11) **EP 1 476 293 B1**
(45) Veröffentlichungstag und Bekanntmachung des Hinweises auf die Patenterteilung: **23.03.2011**
(21) Anmeldenummer: 03700296.1
(22) Anmeldetag: 29.01.2003
(51) Int. Cl.: B29C 45/76, B29C 45/42

(54) **VERFAHREN UND KONTROLLVORRICHTUNG FÜR DIE ZYKLISCHE HERSTELLUNG VON SPRITZGIESSTEILEN**
METHOD AND INSPECTION DEVICE USED FOR THE CYCLIC PRODUCTION OF INJECTION MOLDED PARTS
METHODE ET DISPOSITIF DE CONTROLE DESTINES A ETRE UTILISES LORS DE LA PRODUCTION CYCLIQUE DE PIECES MOULEES PAR INJECTION

(30) Priorität: 20.02.2002 CH 2932002
(43) Veröffentlichungstag der Anmeldung: 17.11.2004
(73) Patentinhaber: Netstal-Maschinen AG, 8752 Näfels (CH)
(72) Erfinder: WEINMANN, Robert, CH-8872 Weesen (CH); JENNY, Daniel, CH-8868 Oberurnen (CH)
(74) Vertreter: Zollner, Richard
(86) Internationale Anmeldenummer: PCT/CH2003/000072
(87) Internationale Veröffentlichungsnummer: WO 2003/070448

(56) Entgegenhaltungen:
- DE-A- 19 848 837
- US-A- 3 100 913
- US-A- 3 642 401
- US-A- 4 057 378
- US-A- 4 187 267
- US-A- 5 582 845
- US-B1- 6 315 543
- PATENT ABSTRACTS OF JAPAN vol. 012, no. 286 (M-727), 5. August 1988 (1988-08-05) & JP 63 062720 A (USHIO YUUTEC:KK), 19. März 1988 (1988-03-19)

## Beschreibung

### Technisches Gebiet

Die Erfindung betrifft ein Verfahren zur Fertigungskontrolle für die zyklische Herstellung von Spritzgießteilen in Mehrfachgießformen durch eine reihenweise Überwachung der Spritzgießteile nach der Entnahme aus den Gießformen mittels Sensoren, insbesondere Lichtschranken, ferner eine Kontrollvorrichtung bei der zyklischen Herstellung von Spritzgießteilen in Mehrfachgießformen durch eine reihenweise Überwachung der Spritzgießteile nach der Entnahme aus den Gießformen mittels Sensoren, insbesondere mittels Lichtschranken.

### Stand der Technik

Man unterscheidet beim Spritzgießen zwei Anwendungsbereiche für Mehrfachgießformen. Eine erste Anwendung ist die Herstellung von relativ dünnwandigen Teilen. Solche Teile werden nach Beendigung des eigentlichen Spritzgießvorgangs noch in der Form soweit abgekühlt, bis diese in einen formstabilem Zustand gebracht sind und nach Öffnen der Formhälften ausgestoßen und verpackt werden.

Eine zweite Anwendung kann mit der Produktion von Preformen illustriert werden. Preformen sind dickwandige Spritzgießteile. Die Wandstärke muss so dick sein, dass das Wandmaterial ausreicht für einen anschließenden Blasprozess mit entsprechend mehrfacher Volumenvergrößerung. Nach dem Blasprozess muss eine PET-Flasche noch eine genügende Wandstärke haben. Die Dickwandigkeit von Spritzgießteilen hat für den Gießprozess den großen Nachteil, dass die Kühlzeit zwei- bis viermal größer ist im Verhältnis zu der eigentlichen Gießzeit. Würde die Preform bis zu einer genügenden Abkühlung in der Gießform verbleiben, so würde die Leistungsfähigkeit der ganzen Spritzgießmaschine entsprechend reduziert. In der Praxis wird die Produktivität der Maschine dadurch auf Höchstleistung gebracht, dass nur ein erster Teil der Kühlung des Spritzgießteils noch in der Gießform erfolgt, derart, dass das Spritzgießteil ohne Schaden den Formen entnommen und Nachkühlungen übergeben werden kann. Spritzgießformen sind ausgebildet für die Herstellung von z.B. 50 bis 200 Preformen pro Zyklus. Die entsprechende Menge an noch heißen Spritzgießteilen wird roboterartig den Formen entnommen, entweder direkt an einen Nachkühler übergeben oder durch spezielle Entnahmevorrichtungen von den Formen an einen Nachkühler transferiert. Im Hinblick auf eine rationelle Produktion wird jeder Arbeitsschritt in der kürzest möglichen Zeit durchgeführt. Die Entnahme und Übergabe der Einzelteile ist jedoch nicht ganz unproblematisch. Aus irgendwelchen Gründen kann ein Einzelteil in der Kühlhülse einer Übergabevorrichtung oder im Nachkühler stecken bleiben. Bleibt z.B. ein Spritzgießteil in der Formhälfte stecken, so führt dies beim anschließenden Formschließen zur Beschädigung der Form. Ein Gleiches gilt für die Entnahmevorrichtung sowie den Nachkühler. Aus Gründen der Zweckmäßigkeit werden sowohl die Formnester wie auch die Kühlpositionen reihenweise angeordnet.

Im Stand der Technik wird zumindest die Entnahme der Spritzgießteile aus den Formen mittels Lichtsensoren überwacht. Mit einem Lichtstrahl über eine ganze Reihe von Preformen wird festgestellt, ob Spritzgießteile noch auf der einen Formhälfte sind bzw. ob wirklich alle Preformen aus den Formen entnommen wurden. Wenn auch nur eine einzige Preform an der Positivformhälfte haften bleibt, trifft der Lichtstrahl nicht auf den Empfänger auf. Es wird dies sofort als Störung signalisiert und der Formschluss gestoppt. Üblicherweise wird die einzelne Preform von Hand entnommen und der Gießprozess danach wieder fortgesetzt. Es versteht sich, dass mit zunehmender Stückzahl an Formnestern in einem Werkzeug bzw. der entsprechenden Stückzahl an Spritzgießteilen pro Gießzyklus auch die Anforderungen an die Fertigungskontrolle steigen. Mit dem Konzept der Nachkühlung mit dem dafür notwendigen Handling vervielfachen sich die Störmöglichkeiten.

Der Erfindung wurde nun die Aufgabe zugrunde gelegt, ein Kontrollverfahren sowie eine Kontrollvorrichtung insbesondere zur Werkzeugsicherung zu entwickeln, mit welchen sich möglichst in "realtime" Störungen in Bezug auf die Übergabe von Spritzgießteilen im Anschluss an den Gießprozess erkennen und dadurch ohne Folgeschäden beheben lassen.

### Darstellung der Erfindung

Das erfindungsgemäße Verfahren ist dadurch gekennzeichnet, dass für jede Reihe ein Sensor ortsfest angeordnet ist, derart, dass die Spritzgießteile je einer Reihe auf die zugeordneten Sensoren zu bewegt, insbesondere einzeln daran vorbei bewegt werden.

Die erfindungsgemäße Vorrichtung ist dadurch gekennzeichnet, dass jeder Reihe wenigstens ein ortsfester Sensor zugeordnet ist, wobei die Sensoren derart angeordnet sind, dass alle Spritzgießteile zwangsweise auf die Sensoren zu bewegbar, insbesondere daran vorbei bewegbar sind, für eine Voll- und/oder Leerkontrolle jeder Position der Reihe.

Von den Erfindern ist erkannt worden, dass insbesondere im Falle der Werkzeugsicherung die relative Bewegung der Spritzgießteile in Bezug auf die Sensoren vielfältige Vorteile bietet. Vor allem kann als erstes die Sicherheit der Überwachung erhöht werden. Es ist leichter, ein eindeutiges Signal zu erhalten, wenn das Vorhandensein oder Nicht-Vorhandensein mit einer Bewegung festgestellt wird. Im Stand der Technik ist eine reihenweise Überwachung der Spritzgießteile bekannt. Die entsprechenden Sensoren werden an den Gießformen befestigt. Jeder Sensor überwacht eine ganze Reihe der Positivformen und stellt sicher, dass die Gießformen nicht geschlossen werden können, wenn nach der Entnahme noch ein oder mehrere Gießteile an der Positivform haften geblieben sind.

Die neue Lösung schlägt im Falle der Werkzeugsicherung vor, dass jedes Spritzgießteil sich an dem Sensor vorbei bewegt. Dies hat den großen Vorteil, dass wenn der Fertigungskontrolle Rechnermittel zugeordnet sind, eine Zählung der Spritzgießteile vorgenommen werden kann. Pro Spritzgießzyklus kann die Sollmenge der Spritzgießteile vorgegeben und die Istmenge bei jeder Entnahme festgestellt und insbesondere eine Leerkontrolle und eine Vollkontrolle bei den Entnahmemitteln durchgeführt werden. Damit werden ganz neue Möglichkeiten eröffnet. Die Kontrolle des Handlings nach der Entnahme der Spritzgießteile kann mit Mitteln zum Abbilden aller zu überwachenden Spritzgießteilpositionen ausgerüstet werden, so dass entweder das Fehlen bzw. das Übrigbleiben eines oder mehrerer Spritzgießteile, vorzugsweise mit Positionsangabe, festgestellt werden kann. Bei der Fertigung von Preformen ist es übliche Praxis, dass die Produktion auch dann fortgesetzt wird, wenn bei einem oder mehreren Formnestern Störungen vorhanden sind. Der Schmelzezufluss zu den betreffenden Formnestern wird gestoppt. Die neue Lösung hat den enormen Vorteil, dass auch dieser Betrieb positiv überwacht bleibt. In Speichermitteln des Rechners können die entsprechenden Daten abgelegt und laufend angepasst werden. Die Sicherheit für die Fertigung bleibt auch hier voll erhalten. Bevorzugt werden die Sensoren im Nahbereich der Spritzgießform angeordnet, zur schnellst möglichen Einleitung eines Sicherheitseingriffes in die Prozesssteuerung.

Die neue Lösung gestattet, die Spritzgießteile der Vorrichtung für die Entnahme aus den Gießformen und/oder in dem Nachkühler zu überwachten. Handelt es sich bei den Spritzgießteilen um Preformen, dann wird die Fertigungskontrolle in dem Nahbereich der Nachkühlung durchgeführt. Jede Preform wird so weit in Hülsen einer Entnahme-vorrichtung und/oder eines Nachkühles geschoben, dass im Wesentlichen nur noch die Gewindeteile aus den Hülsen heraus ragen. Mit den Sensoren werden die Gewindeteile überwacht, welche durch ihre beachtliche Größe eine hohe Sicherheit der Signalerfassung erlauben. Da das für die Preformen verwendete Kunststoffmaterial mehr oder weniger durchsichtig ist, ergeben sich zum Teil bevorzugte Sensortechniken.

Die neue Lösung gestattet ferner eine ganze Anzahl besonders vorteilhafter baulicher Ausgestaltungen. Jeder Sensor wird bevorzugt als Gabellichtschranke ausgebildet, derart, dass jedes Spritzgießteil die Gabelöffnung eines Sensors durchfahren muss. Im Falle von Preformen durchfährt das Gewindeteil die gabelförmige Öffnung der Lichtschranke. Vorzugsweise werden alle Sensoren in einer Ebene an einem gemeinsamen Trägerbalken angeordnet, welcher senkrecht zur Bewegungsrichtung der Spritzgießteile und im Nahbereich der Spritzgießform angeordnet ist. Der gemeinsame Trägerbalken ist in Bezug auf die Entnahmevorrichtung ortsfest angeordnet. Bei der Überwachung des Nachkühlers genügt eine reihenweise Überwachung. Dabei bewegt sich der Nachkühler relativ zu den Sensoren, derart, dass jeweils die Reihen überwacht werden, welche abgeworfen werden.

Die Kontrollvorrichtung kann Visualisierungsmittel aufweisen, zur Darstellung von allfälligen Störungen in Bezug auf einen Leerzustand oder Soll-Vollzustand und Ist-Zustand. Dies gestattet bei wiederholten Störungen eine exakte Lokalisierung und einen raschen, gezielten Korrektureingriff, sei es für einen eingeschränkten Betrieb oder die mechanische Behebung der Störung.

### Kurze Beschreibung der Erfindung

Die Erfindung wird nun an Hand einiger Ausführungsbeispiele mit weiteren Einzelheiten erläutert. Es zeigen:
- die Figur 1: schematisch ein Übersichtsblatt einer Produktionseinheit für die Herstellung von Preformen;
- die Figuren 2a, 2b und 2c: verschiedene Situationen für die Entnahmevorrichtung;
- die Figur 3: ein Beispiel eines Entnahmeroboters für Mehrfachgießformen für die Herstellung von Spritzgießteilen;
- die Figur 4: ein Beispiel für die versetzte Anordnung der Kühlposition in einem Nachkühler;
- die Figur 5: ein Ausführungsbeispiel von Gabellichtschranken an einem gemeinsamen Trägerbalken;
- die Figur 6: die Abwurf-Überwachung aus einem Nachkühler, welcher mit den Preformen relativ zu den Lichtschranken bewegt wird;
- die Figur 7: eine einteilige Kühlhülse mit einer Gabellichtschranke in grösserem Maßstab mit dem Reflexionsprinzip;
- die Figur 8: ein weiteres Beispiel für einen Sensor mit Laser-Mikrowellen oder Infrarotstrahlen als Kantensensor.

### Wege und Ausführung der Erfindung

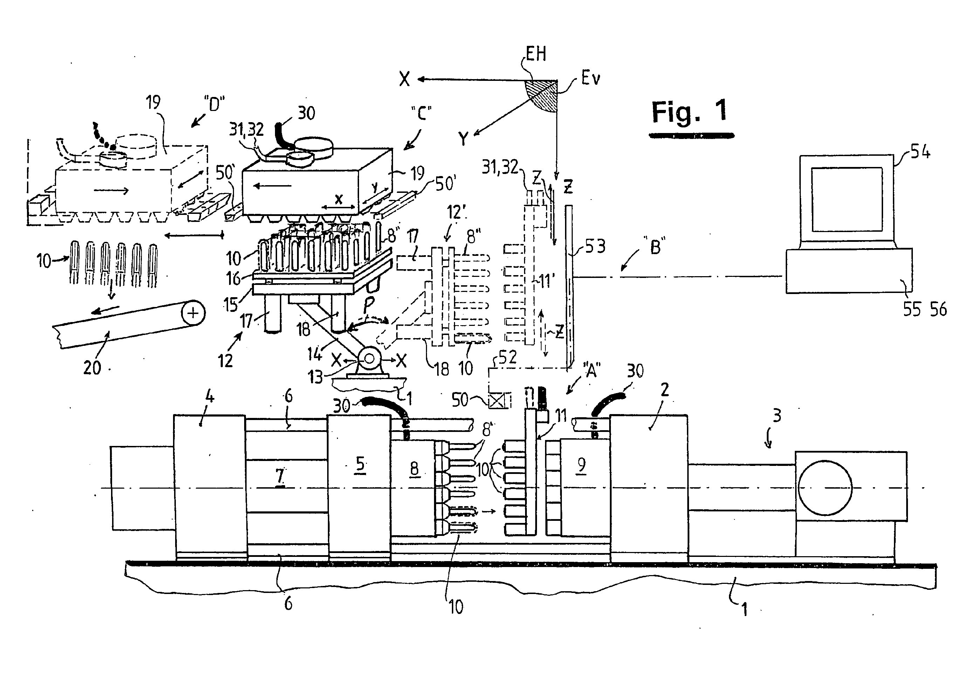

In der Folge wird auf die Figur 1 Bezug genommen. Die Figur 1 zeigt schematisch eine erste bevorzugte Ausgestaltung einer Produktionseinheit für Preformen. Die Figur 1 zeigt eine ganze Spritzgießmaschine mit einem Maschinenbett 1, auf dem eine feste Formaufspannplatte 2 und eine Spritzeinheit 3 gelagert sind. Eine Abstützplatte 4 und eine bewegliche Formaufspannplatte 5 sind axial verschieblich auf dem Maschinen-bett 1 abgestützt. Die beiden festen Platten 2 und 4 sind durch vier Holme 6 miteinander verbunden und durch die bewegliche Formaufspannplatte 5 hindurch geführt. Zwischen der Abstützplatte 4 und der beweglichen Formaufspannplatte 5 befindet sich eine Antriebseinheit 7 zur Erzeugung des Schließdruckes. Die feste Formaufspannplatte 2 und die bewegliche Formaufspannplatte 5 tragen je eine Formhälfte 8 bzw. 9, in denen eine Vielzahl von Kavitäten bzw. Formnester zur Erzeugung einer entsprechenden Zahl hülsenförmiger Spritzgießteile gebildet wird. Die Teilformen 8' sind als Dome ausgebildet, an denen unmittelbar nach dem Öffnen der Formhälften 8 und 9 die hülsenförmigen Spritzgießteile 10 haften und danach ausgestoßen werden. Die Spritzgießteile 10 befinden sich zu diesem Zeitpunkt bereits in einem halb erstarrten Zustand und sind mit unterbrochenen Linien angedeutet. Die gleichen Spritzgießteile 10 im fertig gekühlten Zustand sind in der Figur 1 links oben dargestellt, wo sie gerade aus einer Nachkühleinrichtung 19 ausgeworfen werden. Die oberen Holme 6 sind zum Zweck der besseren Darstellung der Einzelheiten zwischen den geöffneten Formhälften unterbrochen dargestellt. Die vier wichtigsten Handlingsphasen für die Spritzgießteile nach Abschluss des Gießprozesses gemäß der Lösung nach Figur 1 sind:
- **"A"**: ist die Entnahme der Spritzgießteile oder Preformen 10 aus den beiden Formhälften. Die halbstarren Teile werden dabei von einer im Raum zwischen den geöffneten Formhälften abgesenkten Entnahmevorrichtung 11 (Position "A") aufgenommen und mit dieser in die Position "B" angehoben (Aufnahmevorrichtung 11' in Figur 1).
- **"B"**: ist die Übergabe-Stellung der Entnahmevorrichtung 11 mit den Preformen 10 an einem Transfergreifer 12.
- **"C"**: ist die Übergabe der Preformen 10 von dem Transfergreifer 12 an eine Nachkühleinrichtung 19.
- **"D"**: ist der reihenweise Abwurf der abgekühlten und in einen formstabilen Zustand gebrachten Preformen aus der Nachkühleinrichtung 19.

Die Figur 1 zeigt sozusagen Momentaufnahmen der vier Hauptschritte für das Handling. In der Position "B" werden die senkrecht übereinanderliegend angeordneten Spritzgießteile 10 von dem Transfergreifer 12 bzw. 12' übernommen und durch Verschwenken der Transfervorrichtung in Richtung des Pfeiles P in eine stehende Position, gemäss Phase "C", gebracht. Der Transfergreifer 12 besteht aus einem um eine Achse 13 schwenkbaren Haltearm 14, der eine Halteplatte 15 trägt, zu der im Parallelabstand eine Trägerplatte 16 für Zentrierdorne 8" angeordnet ist. Die Trägerplatte 16 ist parallel zur Halteplatte 15 ausstellbar, so dass in der Position "B" die hülsenförmigen Spritzgießteile 10 aus der Entnahmevorrichtung 11 geholt und in der in die Position "C" geschwenkten Lage in die darüberliegende Nachkühleinrichtung 19 geschoben werden können. Die jeweilige Übergabe erfolgt durch Vergrößerung des Abstandes zwischen der Halteplatte 15 und der Trägerplatte 16. Die noch halbstarren Spritzgießteile 10 werden in der Nachkühleinrichtung 19 fertiggekühlt und nach einer Verschiebung der Nachkühleinrichtung 19 in der Position "D" ausgestoßen und auf ein Förderband 20 geworfen. Das Bezugszeichen 30 ist die Wasserkühlung mit entsprechenden Zu- bzw. Abführleitungen, welche zur Vereinfachung mit Pfeilen angedeutet sind und als bekannt vorausgesetzt werden. Das Bezugszeichen 31/32 bezeichnet die Luftseite, wobei 31 für das Einblasen resp. die Druckluftzufuhr und 32 für Vakuum resp. Luftabsaugen steht.

In der Figur 1 ist die Horizontalebene mit EH und die Vertikalebene mit EV bezeichnet. Die Horizontalebene EH wird durch die beiden Koordinaten X und Y und die Vertikalebene durch die Koordinaten Y und Z definiert. Die Z-Koordinate ist vertikal, und die X-Achse ist quer dazu ausgerichtet. Die Bewegung der einzelnen Vorrichtungen bzw. die Automatisierung ist nur schematisch mit Pfeilen angedeutet. Die Figur 1 stellt ein mögliches Grundschema dar, welches in verschiedensten Variationen gemäss der neuen Lösung ausgestaltet werden kann: Der Transfergreifer 12 führt eine Verschwenkbewegung sowie eine Linearbewegung in der X-Koordinate durch. Der Transfergreifer 12 kann zusätzlich mit einer gesteuerten Bewegung in der Y-Koordinate ausgebildet werden. Weil der Transfergreifer bereits eine gesteuerte Bewegung in der X-Koordinate hat, kann die Exaktpositionierung der auf den Haltedornen des Transfergreifers befindlichen Preformen in X-Richtung durch eine entsprechend gesteuerte/geregelte Bewegung durchgeführt werden. Für die Übergabe der Preformen an den Nachkühler 19 wird in diesem Fall der Nachkühler 19 in X-Richtung auf eine fixierte Position gefahren, der Transfergreifer in der Y-Richtung gesteuert/geregelt und in die jeweils gewünschte Position gebracht. Bei der bevorzugten Ausgestaltung sind die Bewegungsmittel für den Nachkühler 19 für die zwei Koordinaten X und Y zur exakten Positionierung des Abwurfes und für die Übergabe der Preformen steuer-/regelbar. Dabei werden Nachkühler und Transfergreifer 12 jeweils in eine definierte Position bewegt.

In der Figur 1 sind zwei Orte für eine Fertigungskontrolle dargestellt:
- der Bereich Entnahme der Preformen aus den Gießformen mit Gabellichtschranke 50 als Werkzeugsicherung
- der Bereich Nachkühlung mit einer Lichtschranke 50' als Abwurfkontrolle.

In beiden Fällen wird das Handling durch zwangsgeführte bzw. gesteuerte mechanische Mittel durchgeführt. Der Beginn für jeden Arbeitsablauf muss klar definiert sein.
- Bevor die Formhälften geschlossen werden, muss sichergestellt sein, dass nicht einzelne Spritzgießformen 10 des vorangehenden Zyklusses noch im Werkzeug haften geblieben sind. Im Hinblick auf die Werkzeugsicherung besteht die wichtigste Sicherung darin, dass im Falle einer Unregelmäßigkeit entweder der Prozess gestoppt oder zumindest das nachfolgende Schließen der Werkzeuge verhindert wird. Es kann dabei entweder der Schließvorgang nicht eingeleitet oder diesen im Notfall während dem Schließen gestoppt werden.
- Vor dem Wiedereinfahren der Entnahmevorrichtung 11 zwischen die beiden offenen Formhälften 8 und 9 muss ein totaler Leerstand sichergestellt werden.
- Vor dem Füllen des Nachkühlers 19 bzw. nach dem Abwurf der fertigen Teile muss sichergestellt sein, dass nicht einzelne Preformen 10 in den betreffenden Positionen steckengeblieben sind.

Im Hinblick auf die Wichtigkeit der Fertigungskontrolle steht im Zentrum die Werkzeugsicherung bzw. Überwachung der Mehrfachgießformen 8 und 9. Eine Kontrollvorrichtung 50 ist im Nahbereich der beiden Gießformhälften 8 und 9 ortsfest mit einer Trägersäule 53 für die Entnahmevorrichtung 11 verbunden, was mit der Hilfslinie 52 angedeutet ist. Eine zweite Einsatzmöglichkeit für die neue Lösung ist in dem Bereich des Nachkühlers 19. Die entsprechende Kontrollvorrichtung ist mit 50' bezeichnet. Visualisierungsmittel sind mit 54 und Speicher/Rechnermittel mit 55, 56 bezeichnet.

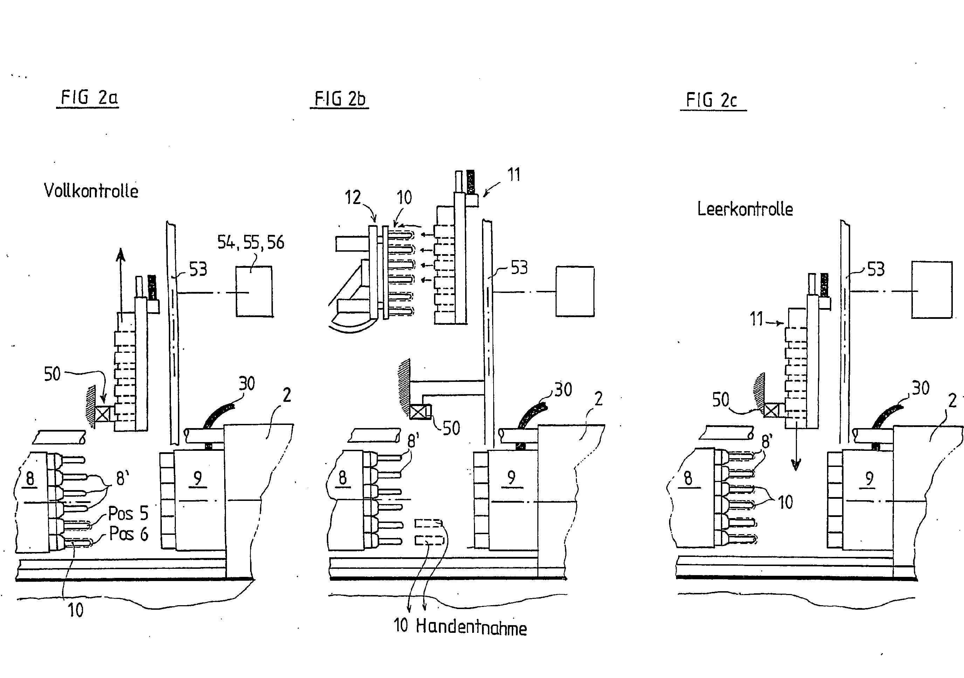

Die Figuren 2a, 2b und 2c zeigen schematisch drei verschiedene Situationen für die Entnahmevorrichtung 11. In der Figur 2a sind als Beispiel von der Entnahme-vorrichtung 11 nur die oberen vier Preformen wirklich übernommen worden. Die Entnahmevorrichtung 11 durchfährt mit den vorstehenden Preformen 10 die Gabellichtschranken 50. Diese stellen beim vollständigen Durchfahren fest, dass die Preformen Pos. 5 und Pos. 6 der betreffenden Reihe fehlen und folglich noch in der einen Formhälfte stecken. Über die Rechnermittel 55, 56 wird nahezu zeitgleich mit dem Sensorsignal ein sofortiger Maschinenstopp ausgelöst. Die beiden Formhälften 8 und 9 können nicht wieder schließen. Es wird ein Alarm ausgelöst, damit der Operator an der Maschine die zwei Preformen Pos. 5 und Pos. 6 von Hand entnehmen und den Prozess wieder starten kann. Eine zweite Möglichkeit liegt darin, dass die zwei entsprechenden Formnester gar nicht aktiv waren. Die beiden Preformen Post. 5 und Pos. 6 wurden gar nicht gespritzt. Hier besteht die Möglichkeit, dass dies im Rezeptspeicher 56 eingegeben wurde. Beim Durchfahren würde in diesem Fall nur bestätigt, dass die zwei Preformen Pos. 5 und Pos. 6 gar nicht hergestellt wurden. Die Produktion kann mit dem geringst möglichen Zeitverzug fortgesetzt werden.

Die Figur 2b zeigt die Situation für einen Transfer von der Entnahmevorrichtung 11 an den Nachkühler 19 über einen Transfergreifer 12 (Figur 1). Es besteht auch hier die Möglichkeit einer Störung. Es können ein oder sogar mehrere Preformen in den entsprechenden Hülsen der Entnahmevorrichtung 11 stecken bleiben. Dies würde bedeuten, dass bei der nächsten Übergabe der heißen Preformen von der entsprechenden Formhälfte 8, 9 zwei Preformen zusammenstoßen würden, mit möglicherweise großen Schadfolgen für das Werkzeug.

Die Figur 2c zeigt die Leerkontrolle. Die Entnahmevorrichtung 11 durchfährt von oben nach unten mit den allenfalls noch darin steckenden Preformen 10 die Lichtschranke. Jede noch steckengebliebene Preform wird festgestellt und der Vorgang sofort unterbrochen, bis eine allenfalls noch steckengebliebene Preformen von Hand entfernt worden ist.

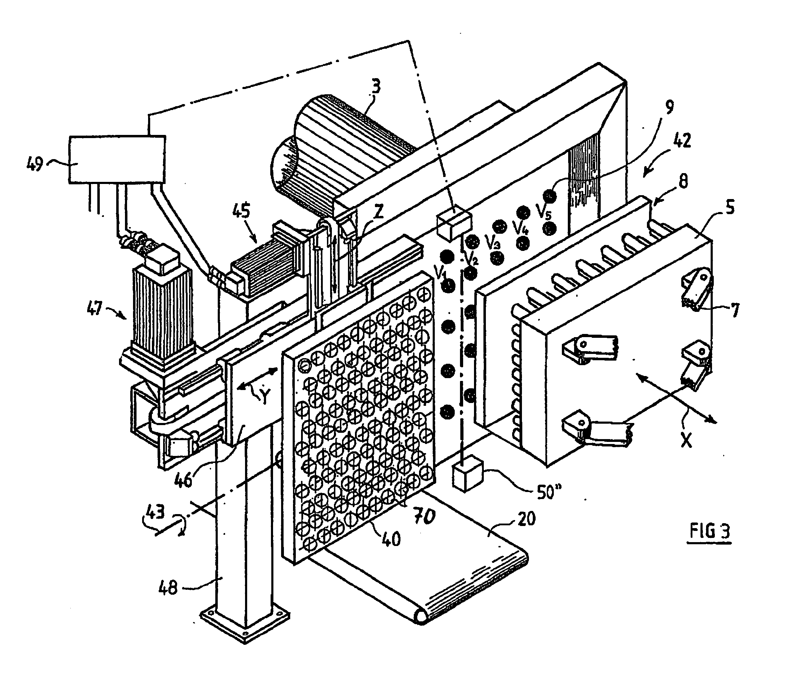

Die Figur 3 zeigt ein Nachkühlkonzept in Kompaktbauweise. Auf Seiten der Spritzgießmaschine kann die Lösung der Figur 1 entsprechen. Ein Nachkühler 40 mit einer Vielzahl von Kühlhülsen 70 weist eine senkrechte Übernahmeebene auf, d.h. eine Ebene innerhalb der Koordinaten Y und Z. In der dargestellten Position sind die beiden Formhälften 8 und 9 in geöffnetem Zustand, so dass der Nachkühler 40 in den freien Zwischenraum 42 zwischen den Formhälften aus- bzw. einfahren kann. Der Nachkühler 40 hat insgesamt drei Bewegungsachsen, eine Horizontalbewegungsachse in der Y-Koordinate, eine Vertikalbewegungsachse in der Z-Koordinate sowie eine Drehachse 43. Die Drehachse 43 dient lediglich dem Abwurf der fertig gekühlten Preformen auf ein Transportband 20. Darauf wird nicht weiter eingegangen. Die Drehachse 43 ist gegenüber dem Ständer 48 gelagert und weist einen Vertikalantrieb 45 auf. Der Vertikalantrieb 45 ist gleitfähig auf einer Trägerplatte 46 eines Horizontalantriebes 47 angeordnet.

Auch in der Figur 3 ist die Kontrollvorrichtung 50" bzw. Sensoren im Nahbereich der Gießformen angeordnet. Die Gießformnester sind in gleichmäßig verteilten vertikalen Reihen V1, V2, V3, V4, usw. angeordnet. Die Kontrollvorrichtung 50" ist ortsfest zu dem Maschinengestell angebracht. Anstatt durch eine Entnahme-vorrichtung werden hier die Preformen direkt in einen Nachkühler 40 geschoben. Bei dem gezeigten Beispiel sind die Kühlpositionen in versetzten Reihen angeordnet, derart, dass in dem Nachkühler 3 bis 4-mal die Menge eines Gießzyklusses platziert werden kann. In den Rechner/Speichermitteln 49 wird ein Abbild der Gieß- und der Kühlposition erstellt, so dass bei Störungen exakt die Fehlerpositionen ermittelt werden können.

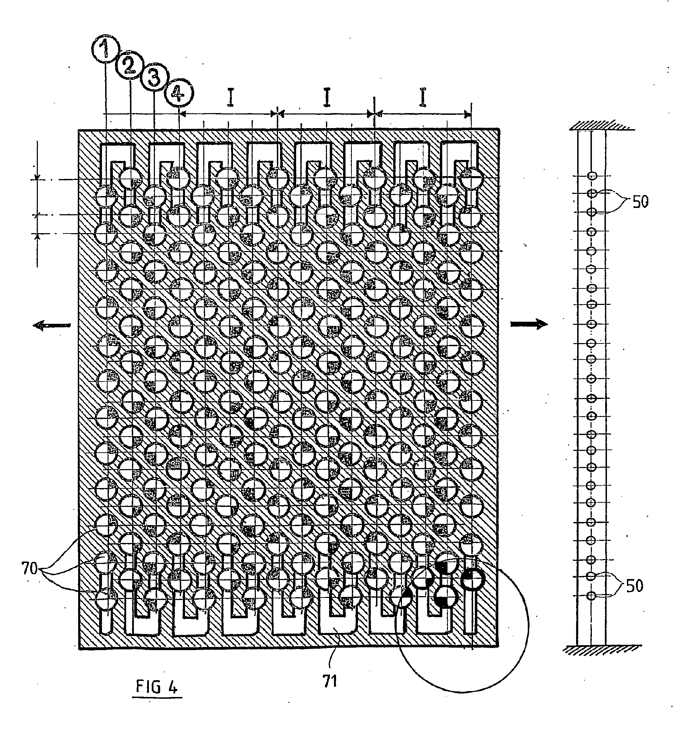

Die Nachkühleinrichtung gemäß Figuren 4 weist mehrere parallel angeordnete Reihen ①, ②, ③, ④ auf. Beim gezeigten Beispiel sind in einer senkrechten Reihe jeweils 12 Kühlhülsen 70 für die Aufnahme je einer Preform 10. Die Kühlhülsen 70 können in Bezug auf die Verhältnisse in den Gießformteilungen sehr viel enger angeordnet werden. Es werden deshalb nicht nur mehrere parallele Reihen, sondern es wird zusätzlich eine Versetzung der Reihen vorgeschlagen, wie mit den Maßangaben x resp. y zum Ausdruck kommt. Dies bedeutet, dass für einen ersten Gießzyklus die Kühlrohre mit Nummern ①, für einen zweiten Gießzyklus die Kühlrohre mit Nummern ②, usw. bezeichnet werden. Sind beim Beispiel mit vier Parallelreihen alle Reihen mit Nr. ④ gefüllt, werden die Reihen mit Nr. ①, wie beschrieben, für ein Ausstoßen auf das Förderband 20 vorbereitet. Der Rest verläuft über die ganze Produktionszeit sinngemäss. Im gezeigten Beispiel liegt die gesamte Nachkühlzeit in der Grössenordnung von drei bis vier mal der Gießzeit. Die Kühlkanäle 71 für die Wasserkühlung müssen optimal angeordnet sein, damit die Wasserkühlung bei allen Kühlrohren möglichst einheitlich und bestmöglich wirkt. Andererseits müssen die Luftdruck- bzw. Unterdruckverhältnisse in der Nachkühleinrichtung reihenweise steuerbar sein, damit zu einem bestimmten Zeitpunkt alle Reihen 1 oder 2, usw. gleichzeitig aktiviert werden können.

Die Figur 4 zeigt eine versetzte Anordnung der Reihen, entsprechend Figur 3. Wichtig ist in jedem Fall die Relativbewegung des Nachkühlers mit den Preformen 10 zu den Sensoren 50, welche bevorzugt ortsfest angebracht werden. Mit einem entsprechenden Abbild der Kühlpositionen sowie der Formnestpositionen kann über die Speicher/Rechnermittel jede Störung unverzüglich mit Positionsangabe festgestellt, und es können die erforderlichen Steuerbefehle erteilt werden.

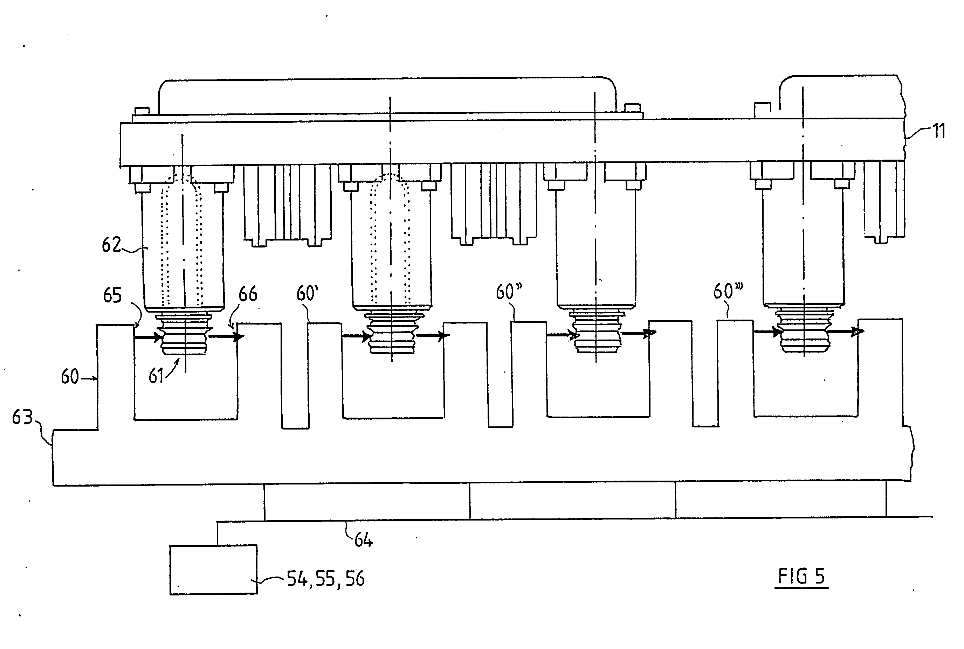

Die Figur 5 zeigt eine bevorzugte Ausgestaltung mit einer Vielzahl von Gabellichtschranken 60, 60', 60", usw., für die Werkzeugsicherung, welche an einem gemeinsamen Tragbalken 63 befestigt sind. Das Gewindeteil 61 ragt aus den Kühlhülsen 62 heraus und bewegt sich senkrecht zur Bildebene der Figur 5. Jeder Sensor bzw. jede Lichtschranke ist mit einer Signalleitung 64 mit dem Rechner/Speicher 54, 55, 56, verbunden. Die Figur 5 ist die Anwendung bei der Entnahme der Spritzgießteile aus den Gießformen, bei der eine Zählung der produzierten Teile erwünscht ist. Jede Lichtschranke hat einen Sendeteil 65 sowie einen Empfangsteil 66. Bewegt sich ein Gewindeteil durch die Gabellichtschranke, so wird ein entsprechendes Signal erzeugt.

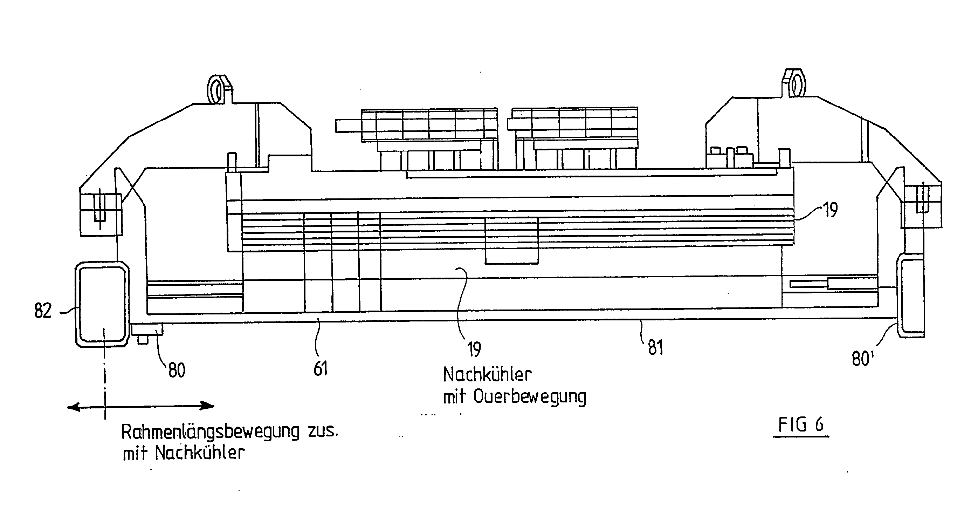

Die Figur 6 zeigt die Anwendung einer Lichtschranke 80, 80' bei einem gesonderten Nachkühler 19. Hier geht es darum, den vollständigen Abwurf aller Spritzgießteile nach Beendigung der Nachkühlung mit einem Lichtstrahl 81 zu kontrollieren. Eine Nachzählung ist dabei nicht erforderlich. Der Nachkühler 19 bewegt sich senkrecht zur Bildebene jeweils in die gewünschte Aufnahme- oder Abwurfposition. Die Lichtschranken sind fest an einem längs verfahrbaren Rahmen 82 angebracht. In der Lösung gemäss Figur 6 bewegen sich die Preformen reihenweise in dem Lichtstrahl. Gemäss einer weiteren Ausgestaltung kann auch für den Transfergreifer sinngemäß eine Lichtschrankenüberwachung in der Form einer Gabellichtschranke oder mit Durchlicht bzw. Lichtstrahl 81 für eine ganze Reihe eingesetzt werden.

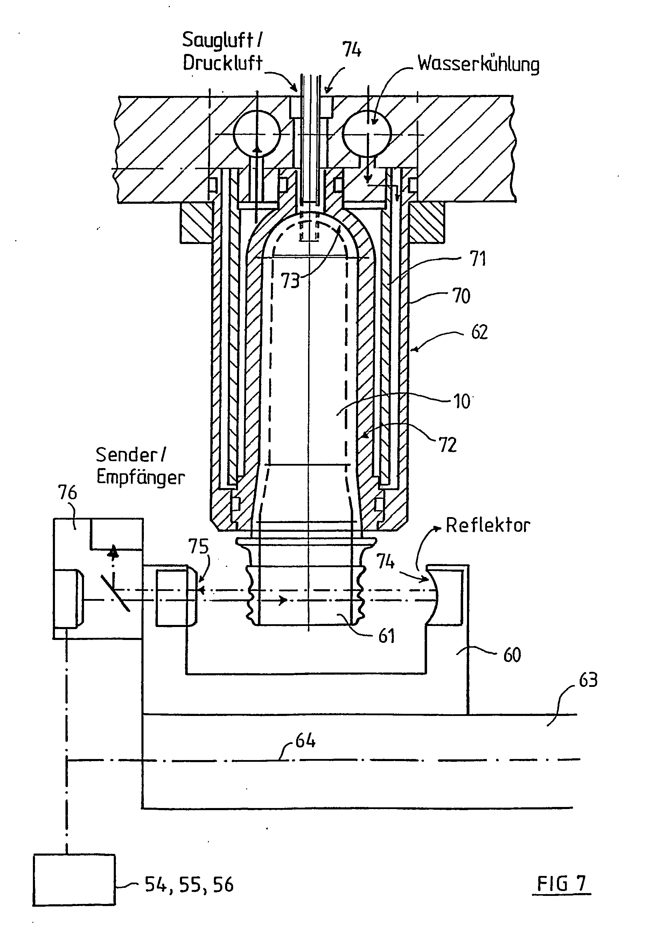

Die Figur 7 zeigt eine bevorzugte Ausgestaltung einer Kühlhülse 62. Die Kühlhülse 62 besteht aus einem Kühldoppelmantel 70, 71 sowie der inneren Kühlform 72. Die innere Kühlform 72 hat eine Innenkontur, welche mit wenig Spiel angepasst ist an die äußere Form der Spritzgießteile. Besonders interessant ist dabei die domförmige Partie 73. Im Inneren der Kühlform liegt die Preform satt an der gewölbten Form an. Die Kühlform 72 weist eine relativ dünne konstante Wandstärke bis in den Dombereich auf. Dadurch sind die Kühlbedingungen, insbesondere der Wärmefluss für den ganzen Bereich der Preform, welcher in die Kühlhülse eingetaucht ist, optimal. In der Domspitze ist eine Luftverbindung 74, über welche entweder Überdruck (beim Ausstoßen) oder Unterdruck (beim Einsaugen der Preform bis auf Domanschlag) herstellbar ist. Aus der Figur 7 ist ferner ersichtlich, dass der ganze Gewindeteil G aus der Kühlhülse herausragt und für die Sensorüberwachung nutzbar ist. Die Figur 7 zeigt schematisch die Anwendung eines Lichtsensors mit einem Reflektor 74. Der Reflektor sendet den Lichtstrahl an den Sender 75 zurück. Durch entsprechende Spiegeleinrichtungen in der Sensoreinrichtung 76 wird das Signal verarbeitet und über eine Signalleitung 64 an die Überwacheinrichtung 54, 55, 56 geleitet.

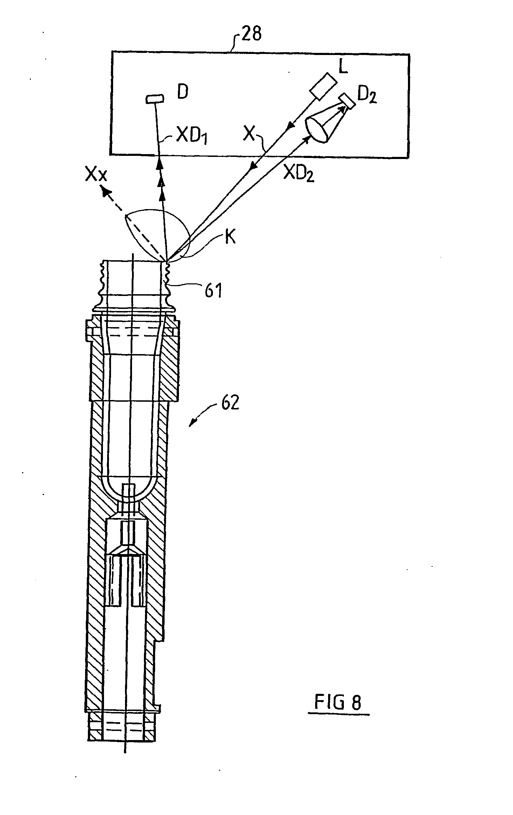

Die Figur 8 zeigt eine weitere Ausgestaltung von einem Sensor, der als Kantensensor ausgebildet ist. Dabei können Laser-, Mikrowellen- oder Infrarotstrahlen verwendet werden. Die Figur 8 zeigt einen Laser-Sensor, der auf optischer Kantenerkennung basiert. Die Kanten der Spritzgießteile werden am leichtesten erkannt, wenn diese unter dem Laserstrahl durchgeführt werden. Eine Laserdiode mit Fokussieroptik (L) der Sensoreinrichtung 28 erzeugt auf der Förderebene einen winzigen roten Lichtpunkt, der gut sichtbar ist. Der Laserstrahl (X) trifft dabei schräg auf die Fläche auf. Gemäss Lichtstreutheorie wird der größte Teil des Lichtes in Richtung (Xx) reflektiert. Der Detektor D1 empfängt dann mehr Licht (XD1) als der Detektor D2 (XD2). Trifft der Laserstrahl auf eine Kante, ist genau das Gegenteil der Fall. D2 empfängt mehr Licht als D1. Das kompakte Gerät erkennt dank seines gut fokussierten Laserstrahles auch noch kleinste Kanten. Ein eingebauter Mikrokontroller unterdrückt unterwünschte Mehrfachpulse, indem das Gerät nach jeder erfassten Oberkante während einer Totzeit inaktiv geschaltet wird. Verschiedene Programme garantieren eine optimale Anpassung an alle Zählprobleme:
- Fixe Totzeit: Einstellbar in Millisekunden.
- Dynamische Totzeit: Der Mikrokontroller überwacht dauernd die Pulsfolge und elimi-niert Mehrfachpulse auch bei variierender Fördergeschwindigkeit, indem er die Totzeit dynamisch der Pulsfolge anpasst.
- Synchronisation mit dem Maschinentakt: Über einen Synchronisationseingang kann mit dem Maschinentakt (z.B. aus einem Drehgeber) synchronisiert werden. Damit entspricht der Totbereich einer definierten Distanz, die absolut unabhängig ist von der Fördergeschwindigkeit.

## Patentansprüche

1. Verfahren zur Fertigungskontrolle für die zyklische und prozessgesteuerte Her-stellung von Spritzgießteilen (10) in Mehrfachgießformen (8, 9) mit reihenweiser Anordnung der Spritzgießteile (10) durch eine Überwachung des Handlings der Spritzgießteile (10) in Kühlhülsen der Nachkühlung nach der Entnahme aus den Mehrfachgießformen (8, 9) mittels Sensoren (28, 40, 50, 60) insbesondere Lichtschranken (60, 60', 60"),
**dadurch gekennzeichnet,**
**dass** eine Kontrolle an den Kühlhülsen (62) der Entnahmemittel (11, 12) beim Einfahren zwischen die Mehrfachgießformen (8, 9) und beim Ausfahren aus den Mehrfachgießformen (8, 9) durchgeführt wird, wobei die Überwachung reihenweise durch ortsfest im Nahbereich der Mehrfachgießformen angeordnete Sensoren (28, 40, 50, 60) erfolgt, und die Kühlhülsen (62) auf die Sensoren (28, 40, 50, 60) zwangsweise zubewegt bzw. daran vorbei bewegt werden, zur Störerkennung, entweder für das Fehlen eines Spritzgießteiles (10) oder für das Steckenbleiben von einzelnen Spritzgießteilen (10) und einer sofortigen Einleitung eines Sicherheitseingriffes.

2. Verfahren nach Anspruch 1,
**dadurch gekennzeichnet,**
**dass** für jede Reihe (①, ②, ③, ④) der Spritzgießteile (10) ein Sensor (28, 40, 50, 60) ortsfest angeordnet ist, derart, dass jedes einzelne Spritzgießteil (10) daran vorbei bewegt wird.

3. Verfahren zur Fertigungskontrolle für die zyklische und prozessgesteuerte Her-stellung von Spritzgießteilen (10) in Mehrfachgießformen (8, 9) mit reihenweiser Anordnung der Spritzgießteile (10) durch eine Überwachung des Handlings der Spritzgießteile (10) in Kühlhülsen der Nachkühlung nach der Entnahme aus den Gießformen mittels Sensoren (28, 40, 50, 60) insbesondere Lichtschranken (60, 60', 60"),
**dadurch gekennzeichnet,**
**dass** eine Kontrolle vor dem Füllen und eine Kontrolle nach dem Leeren der Kühlhülsen (70) des Nachkühlers (19; 40) durchgeführt wird, wobei die Überwachung reihenweise durch ortsfest im Bereich des Nachkühlers (19; 40) angeordnete Sensoren (50') erfolgt, und die Kühlhülsen (70) auf die Sensoren (50') zwangsweise zubewegt bzw. daran vorbei bewegt werden, zur Störerkennung, entweder für das Fehlen eines Spritzgießteiles (10) oder für das Steckenbleiben von einzelnen Spritzgießteilen (10) und einer sofortigen Einleitung eines Sicherheitseingriffes.

4. Verfahren nach Anspruch 3,
**dadurch gekennzeichnet,**
**dass** die Kühlhülsen (70) reihenweise überwacht werden.

5. Verfahren nach Anspruch 1 oder 3,
**dadurch gekennzeichnet,**
**dass** der Fertigungskontrolle Rechnermittel (49) zugeordnet sind, eine Zählung der Spritzgießteile (10) vorgenommen wird, pro Spritzgießzyklus die Sollmenge der Spritzgießteile (10) vorgegeben und die Istmenge bei jeder Entnahme festgestellt wird

6. Verfahren nach Anspruch 1 oder 3,
**dadurch gekennzeichnet,**
**dass** die Kontrolle des Handlings nach der Entnahme der Spritzgießteile (10) Mittel zum Abbilden aller zu überwachenden Spritzgießteilpositionen aufweist und entweder das Fehlen bzw. das Übrigbleiben eines oder mehrerer Spritzgießteile (10), vorzugsweise mit Positionsangabe, festgestellt und ein allenfalls erforderlicher Prozesseingriff sofort eingeleitet wird.

7. Verfahren nach einem der Ansprüche 1 bis 6,
**dadurch gekennzeichnet,**
**dass** die Spritzgießteile Preformen (10) sind und die Fertigungskontrolle in dem Nahbereich der Nachkühlung (19; 40) oder der Mehrfachgießformen (8, 9) durchgeführt wird, wobei jede Preform (10) so weit in die Kühlhülsen (62; 70) einer Entnahmevorrichtung (11) und/oder eines Nachkühlers (19; 40) geschoben werden, dass im wesentlichen nur noch die Gewindeteile (61) aus den Kühlhülsen (70) herausragen, welche mittels der Sensoren (28, 40, 50, 60) kontrolliert werden.

8. Kontrollvorrichtung bei der zyklischen und prozessgesteuerten Herstellung von Spritzgießteilen (10) in Mehrfachgießformen (8, 9) mit reihenweiser Anordnung der Spritzgießteile (10) durch eine Überwachung des Handlings der Spritzgießteile (10) nach der Entnahme aus den Mehrfachgießformen (8, 9) und der Kühlhülsen (62; 70) in der Nachkühlung (19; 40) mittels Sensoren (28), insbesondere mittels Lichtschranken (60),
**dadurch gekennzeichnet,**
**dass** wenigstens eine ortsfeste Sensorüberwachung (28) in Bezug auf die Spritzgießteilereihen (①, ②, ③ , ④) angeordnet ist, wobei die Sensoren (28) derart angeordnet sind, dass alle Kühlhülsen (70) zwangsweise darauf zubewegbar, bzw. daran vorbei bewegbar sind, für eine Kontrolle jeder Position der Reihe (①, ②, ③, ④, wobei die Sensorüberwachung im Bereich der Mehrfachgießformen (8, 9) und/oder eines Nachkühlers (19; 40) angeordnet sind, zur sofortigen Störerkennung und Einleitung eines Sicherheitseingriffes.

9. Kontrollvorrichtung nach Anspruch 8,
**dadurch gekennzeichnet,**
**dass** sie Rechnermittel (49) zur Zählung der Spritzgießteile (10) und eine Störerkennung, entweder für das Fehlen eines Spritzgießteiles (10) oder für das Steckenbleiben von einzelnen Spritzgießteilen (10), aufweist.

10. Kontrollvorrichtung nach Anspruch 8 oder 9,
**dadurch gekennzeichnet,**
**dass** jeder Sensor (28) als Lichtschranke, insbesondere als Gabellichtschranke (60, 60', 60") ausgebildet ist, derart, dass jedes Spritzgießteil (10) durch die Gabel eines Sensors (28) hindurchfahren muss.

11. Kontrollvorrichtung nach einem der Ansprüche 8 bis 10,
**dadurch gekennzeichnet,**
**dass** die zu kontrollierenden Spritzgießteile Preformen (10) sind, wobei jeder Sensor (28) bzw. jede Gabellichtschranke (60, 60', 60") für eine Kontrolle des Gewindebereiches (61) der Preformen (10) ausgebildet ist.

12. Kontrollvorrichtung nach einem der Ansprüche 8 bis 11,
**dadurch gekennzeichnet,**
**dass** alle Sensoren (28) in einer Ebene an einem gemeinsamen Balken (63) angeordnet sind, welcher senkrecht zur Bewegungsrichtung der Spritzgießteile (10) und im Nahbereich der Mehrfachgießform (8, 9) angeordnet ist.

13. Kontrollvorrichtung nach Anspruch 12,
**dadurch gekennzeichnet,**
**dass** der gemeinsame Balken (63) in Bezug auf die Entnahmevorrichtung (11, 11') ortsfest angeordnet ist.

14. Kontrollvorrichtung (40, 50) nach einem der Ansprüche 8 bis 13,
**dadurch gekennzeichnet,**
**dass** sie Visualisierungsmittel aufweist, zur Darstellung von allfälligen Störungen in Bezug auf einen Leerzustand oder Soll-Vollzustand.

## Claims

1. Method for production control for the cyclic and process-controlled manufacture of injection-moulded parts (10) in multi-cavity casting moulds (8, 9) with row-by-row arrangement of the injection-moulded parts (10) by monitoring the handling of the injection-moulded parts (10) in cooling cavities of the post-cooler following removal from the multi-cavity casting moulds (8, 9) by means of sensors (28, 40, 50, 60), in particular photoelectric barriers (60, 60', 60"),
**characterized in that**
a control of the cooling cavities (62) of the removal means (11, 12) is carried out on introduction between the multi-cavity casting moulds (8, 9) and on moving out from the multi-cavity casting moulds (8, 9), wherein the monitoring takes place row by row by sensors (28, 40, 50, 60) arranged fixedly in the proximity of the multi-cavity casting moulds, and the cooling cavities (62) are obligatorily moved to or respectively past the sensors (28, 40, 50, 60) in order to recognize errors, either for the absence of an injection-moulded part (10) or for the retention of individual injection-moulded parts (10) and an immediate initiation of a safety intervention.

2. Method according to Claim 1,
**characterized in that**
for each row (①, ②, ③, ④) of the injection-moulded parts (10) a sensor (28, 40, 50, 60) is fixedly arranged, such that each individual injection-moulded part (10) is moved past it.

3. Method for production control for the cyclic and process-controlled manufacture of injection-moulded parts (10) in multi-cavity casting moulds (8, 9) with row-by-row arrangement of the injection-moulded parts (10) by monitoring the handling of the injection-moulded parts (10) in cooling cavities of the post-cooler following removal from the casting moulds by means of sensors (28, 40, 50, 60), in particular photoelectric barriers (60, 60' 60"),
**characterized in that**
a control is carried out before the filling and a control is carried out after the emptying of the cooling cavities (70) of the post-cooler (19; 40), wherein the monitoring takes place row by row by sensors (50') arranged fixedly in the region of the post-cooler (19, 40), and the cooling cavities (70) are moved obligatorily to and past the sensors (50') in order to recognize errors, either for the absence of an injection-moulded part (10) or for the retention of individual injection-moulded parts (10) and an immediate initiation of a safety intervention.

4. Method according to Claim 3,
**characterized in that**
the cooling cavities (70) are monitored row by row.

5. Method according to Claim 1 or 3,
**characterized in that**
computer means (49) are associated with the production control, a counting of the injection-moulded parts (10) is carried out, the desired quantity of the injection-moulded parts (10) is predetermined per injection moulding cycle, and the actual quantity is determined on each removal.

6. Method according to Claim 1 or 3,
**characterized in that**
the control of the handling after the removal of the injection-moulded parts (10) has means for imaging all of the injection-moulded part positions which are to be monitored and either the absence or the remaining of one or more injection-moulded parts (10) is determined, preferably with indication of position, and any necessary intervention in the process is initiated immediately.

7. Method according to one of Claims 1 to 6,
**characterized in that**
the injection-moulded parts are preforms (10) and the production control is carried out in the proximity of the post-cooler (19; 40) or of the multi-cavity injection moulds (8, 9), wherein each preform (10) is pushed so far into the cooling cavities (62; 70) of a removal device (11) and/or of a post-cooler (19; 40) that substantially only the threaded portions (61) project out from the cooling cavities (70), which are controlled by means of the sensors (28, 40, 50, 60).

8. Control device in the cyclic and process-controlled manufacture of injection-moulded parts (10) in multi-cavity casting moulds (8, 9) with row-by-row arrangement of the injection-moulded parts (10) by a monitoring of the handling of the injection-moulded parts (10) after removal from the multi-cavity casting moulds (8, 9) and the cooling cavities (62; 70) in the post-cooler (19; 40) by means of sensors (28), in particular by means of photoelectric barriers (60),
**characterized in that**
at least one fixed sensor monitoring arrangement (28) is arranged with respect to the rows (①, ②, ③, ④) of the injection-moulded parts, wherein the sensors (28) are arranged such that all the cooling cavities (70) are movable compulsorily to or respectively past them, for a control of each position of the row (①, ②, ③, ④), wherein the sensor monitoring arrangements are arranged in the region of the multi-cavity casting moulds (8, 9) and/or of a post-cooler (19; 40), for immediate error recognition and initiation of a safety intervention.

9. Control device according to Claim 8,
**characterized in that**
it has computing means (49) for counting the injection-moulded parts (10) and a means for error recognition, either for the absence of an injection-moulded part (10) or for the retention of individual injection-moulded parts (10).

10. Control device according to Claim 8 or 9,
**characterized in that**
each sensor (28) is constructed as a photoelectric barrier, in particular as a forked photoelectric barrier (60, 60', 60"), such that each injection-moulded part (10) must travel through the fork of a sensor (28).

11. Control device according to one of Claims 8 to 10,
**characterized in that**
the injection-moulded parts which are to be controlled are preforms (10), wherein each sensor (28) or respectively each forked photoelectric barrier (60, 60', 60") is constructed for a control of the threaded portion (61) of the preforms (10).

12. Control device according to one of Claims 8 to 11,
**characterized in that**
all the sensors (28) are arranged in one plane on a shared bar (63) which is arranged perpendicularly to the direction of movement of the injection-moulded parts (10) and in the proximity of the multi-cavity casting mould (8, 9) .

13. Control device according to Claim 12,
**characterized in that**
the shared bar (63) is fixedly arranged with respect to the removal device (11, 11').

14. Control device (40, 50) according to one of Claims 8 to 13,
**characterized in that**
it has visualizing means to display any errors with regard to an empty state or nominal full state.

## Revendications

1. Procédé de contrôle destiné à être utilisé lors de la production cyclique et commandée par procédé de pièces moulées par injection (10) dans des moules multiples (8, 9) avec un agencement par rangées des pièces moulées par injection (10), par une surveillance de la manipulation des pièces moulées par injection (10) dans des manchons de refroidissement du post-refroidissement après leur enlèvement des moules multiples (8, 9), au moyen de capteurs (28, 40, 50, 60), en particulier de cellules photoélectriques (60, 60', 60"),
**caractérisé en ce qu'**un contrôle est effectué sur les manchons de refroidissement (62) des moyens d'enlèvement (11, 12) à l'introduction entre les moules multiples (8, 9) et à la sortie des moules multiples (8, 9), sachant que la surveillance s'effectue par rangée par des capteurs (28, 40, 50, 60) fixes placés dans le voisinage des moules multiples, et les manchons de refroidissement (62) sont avancés de manière forcée sur les capteurs (28, 40, 50, 60), sont passés respectivement devant ceux-ci pour détecter les défaillances, soit une pièce moulée par injection (10) manquante, soit des pièces moulées par injection (10) restées coincées et pour introduire immédiatement une intervention de sécurité.

2. Procédé selon la revendication 1, **caractérisé en ce qu'**un capteur (28, 40, 50, 60) est placé fixement pour chaque rangée (①, ②, ③, ④) des pièces moulées par injection (10) de telle façon que chaque pièce moulée par injection (10) puisse être avancée devant celui-ci.

3. Procédé de contrôle destiné à être utilisé lors de la production cyclique et commandée par procédé de pièces moulées par injection (10) dans des moules multiples (8, 9) avec un agencement par rangées des pièces moulées par injection (10), par une surveillance de la manipulation des pièces moulées par injection (10) dans des manchons de refroidissement du post-refroidissement après leur enlèvement des moules multiples, au moyen de capteurs (28, 40, 50, 60), en particulier de cellules photoélectriques (60, 60', 60"),
**caractérisé en ce qu'**un contrôle est effectué avant le remplissage et qu'un contrôle est effectué après le vidage des manchons de refroidissement (70) du post-refroidisseur (19 ; 40), sachant que la surveillance s'effectue par rangée par des capteurs (50') fixes placés au niveau du post-refroidisseur (19 ; 40), et les manchons de refroidissement (70) sont avancés de manière forcée sur les capteurs (50'), sont passés respectivement devant ceux-ci pour détecter les défaillances, soit une pièce moulée par injection (10) manquante, soit des pièces moulées par injection (10) restées coincées et pour introduire immédiatement une intervention de sécurité.

4. Procédé selon la revendication 3, **caractérisé en ce que** les manchons de refroidissement (70) sont surveillés par rangée.

5. Procédé selon la revendication 1 ou 3, **caractérisé en ce que** le contrôle comprend des moyens de calcul (49), qu'un décompte des pièces moulées par injection (10) est effectué, que la quantité nominale de pièces moulées par injection (10) est prédéfinie par cycle de moulage par injection et que la quantité réelle est constatée à chaque enlèvement.

6. Procédé selon la revendication 1 ou 3, **caractérisé en ce que** le contrôle de la manipulation après l'enlèvement des pièces moulées par injection (10) présente des moyens pour représenter en image toutes les positions de pièces moulées par injection à surveiller et si une pièce moulée par injection (10) est manquante ou si une ou plusieurs pièce(s) moulée(s) par injection (10) est/sont restée(s) coincée(s), de préférence avec indication de la position, une intervention de sécurité nécessaire éventuelle est immédiatement introduite.

7. Procédé selon l'une des revendications 1 à 6, **caractérisé en ce que** les pièces moulées par injection (10) sont des préformes (10) et le contrôle est effectué dans le voisinage du post-refroidissement (19 ; 40) ou des moules multiples (8, 9), sachant que chaque préforme (10) est poussée si loin dans les manchons de refroidissement (62 ; 70) d'un dispositif d'enlèvement (11) et/ou d'un post-refroidisseur (19 ; 40) qu'essentiellement seules les parties filetées (61) dépassent des manchons de refroidissement (70), lesquels sont contrôlés au moyen des capteurs (28, 40, 50, 60).

8. Procédé de contrôle destiné à être utilisé lors de la production cyclique et commandée par procédé de pièces moulées par injection (10) dans des moules multiples (8, 9) avec un agencement par rangées des pièces moulées par injection (10), par une surveillance de la manipulation des pièces moulées par injection (10) après leur enlèvement des moules multiples (8, 9) et des manchons de refroidissement (62 ; 70) dans le post-refroidissement (19 ; 40) au moyen de capteurs (28), en particulier de cellules photoélectriques (60),
**caractérisé en ce qu'**au moins une surveillance fixe par capteurs (28) est placée par rapport aux rangées (①, ②, ③, ④) de pièces moulées par injection, sachant que les capteurs sont ainsi placés que tous les manchons de refroidissement (70) peuvent être avancés de manière forcée sur ceux-ci, peuvent être passés respectivement devant ceux-ci pour contrôler chaque position de la rangée (①, ②, ③, ④), sachant que la surveillance par capteurs est placée au niveau des moules multiples (8, 9) et/ou d'un post-refroidisseur (19 ; 40) pour la détection des défaillances et l'introduction immédiate d'une intervention de sécurité.

9. Procédé de contrôle selon la revendication 8, **caractérisé en ce qu'**il présente des moyens de calcul (49) destinés à un décompte des pièces moulées par injection (10) et une détection des défaillances, soit une pièce moulée par injection (10) manquante, soit des pièces moulées par injection (10) restées coincées.

10. Procédé de contrôle selon la revendication 8 ou 9, **caractérisé en ce que** chaque capteur (28) est une cellule photoélectrique, en particulier une barrière lumineuse à fourche (60, 60', 60" ) de telle sorte que chaque pièce moulée par injection (10) doit passer à travers la fourche d'un capteur (28).

11. Procédé de contrôle selon l'une des revendications 8 à 10, **caractérisé en ce que** les pièces moulées par injection (10) à contrôler sont des préformes (10), sachant que chaque capteur (28) respectivement chaque barrière lumineuse à fourche (60, 60', 60") est formé(e) pour un contrôle de la partie filetée (61) des préformes (10).

12. Procédé de contrôle selon l'une des revendications 8 à 11, **caractérisé en ce que** tous les capteurs (28) sont placés sur une barre commune (63) dans un plan, laquelle est placée perpendiculairement à la direction de mouvement des pièces moulées par injection (10) et dans le voisinage du moule multiple (8, 9).

13. Procédé de contrôle selon la revendication 12, **caractérisé en ce que** la barre commune (63) est placée de manière fixe par rapport au dispositif d'enlèvement (11, 11').

14. Procédé de contrôle (40, 50) selon l'une des revendications 8 à 13, **caractérisé en ce qu'**il présente des moyens de visualisation pour représenter d'éventuelles défaillances par rapport à un état vide ou à un état plein nominal.
